# EUROPÄISCHE PATENTSCHRIFT

(11) **EP 0 370 230 B1**
(45) Veröffentlichungstag und Bekanntmachung des Hinweises auf die Patenterteilung: **16.06.1993**
(21) Anmeldenummer: 89119307.0
(22) Anmeldetag: 18.10.1989
(51) Int. Cl.: B60T 8/26

(54) **Bremskraftregler für hydraulische Bremsanlagen sowie Verfahren zu seiner Montage**
Brake pressure control valve for hydraulic systems, and method for mounting same
Régulateur de freinage pour systèmes de freinage hydrauliques ainsi que son procédé de montage

(30) Priorität: 24.11.1988 DE 3839566
(43) Veröffentlichungstag der Anmeldung: 30.05.1990
(73) Patentinhaber: ALFRED TEVES GmbH, 60441 Frankfurt (DE)
(72) Erfinder: Winter, Klaus, D-3414 Hardegsen (DE)
(74) Vertreter: Portwich, Peter

(56) Entgegenhaltungen:
- EP-A- 0 079 427
- EP-A- 0 084 719
- EP-A- 0 108 397
- DE-A- 3 001 368
- DE-B- 1 680 762
- DE-C- 820 249
- DE-C- 2 926 499
- GB-A- 2 053 396
- US-A- 4 221 437

## Beschreibung

Die vorliegende Erfindung geht von einem Bremskraftregler der im Oberbegriff des Hauptanspruchs genannten Gattung aus.

Ein gattungsgemäßer Bremskraftregler ist aus der EP-A-0 108 397 bekannt. Der darin beschriebene Bremskraftregler besitzt in einem Gehäusehohlraum einen Regelkolben, der ein Regelventil betätigt. Der Schaltdruck, d.h. der Ausgangsdruck, bei welchem sich das Regelventil erstmalig schließt, ist durch die auf den Regelkolben ausgeübte Druckkraft einer vorgespannten Feder festgelegt. Um ungeachtet möglicher Fertigungstoleranzen den Schaltdruck genau einstellen zu können, wirkt die Feder auf den Regelkolben über eine Federabstützung ein, welche mit einem Innengewinde versehen ist, das auf ein Außengewinde des Regelkolbens aufgeschraubt ist. Mit einer Stirnseite ragt der Regelkolben abgedichtet an die Atmosphäre. In dieser Stirnseite ist ein Schlitz angebracht, so daß der Regelkolben mit einem Schraubendreher um seine Achse gedreht werden kann. Die Justierung der Federvorspannung erfolgt dadurch, daß der Gehäusehohlraum unter Druckmitteldruck entsprechend dem vorgesehenen Schaltdruck gesetzt wird und der Regelkolben solange gegen die Federabstützung gedreht wird, bis sich ein Kräftegleichgewicht zwischen Feder und Druckmittel einstellt.

Dabei ist es jedoch von Nachteil, daß zur Einstellung des Schaltdruckes jeder einzelne Regler an eine hydraulische Druckquelle angeschlossen werden muß. Außerdem kann die vom Schraubendreher auf den Regelkolben wirkende Axialkraft die Kräfteverhältnisse beeinflussen, so daß es möglicherweise zu Einstellfehlern kommt.

Die Aufgabe der vorliegenden Erfindung besteht daher darin, einen gattungsgemäßen Bremskraftregler zu schaffen, der eine druckmittelfreie, aber dennoch präzise Einstellung des Schaltdrucks erlaubt, welche einfach und zeitsparend durchzuführen ist.

Diese Aufgabe wird erfindungsgemäß gelöst durch die Merkmale im kennzeichnenden Teil des Hauptanspruchs.

Eine vorteilhafte Weiterbildung des Erfindungsgegenstandes sieht vor, daß mehrere, vorzugsweise drei gleichmäßig über den Umfang des Gehäuses verteilte koaxiale Bohrungen im Gehäuse des Bremskraftreglers vorgesehen sind, in denen Stifte eines Einstellwerkzeuges mit einer vorgegebenen Kraft gegen den Anschlag der Feder drücken, so daß nach genauer Einjustierung des Anschlages das Gehäuse von außen an drei Stellen angestaucht, bzw. gequetscht wird.

Unter Berücksichtigung des vorgenannten Gesichtspunktes sieht die weitere Ausbildung der Erfindung vor, die anzuquetschenden Stellen über den Umfang der zweiten Gehäusehälfte in gleichen Abständen beispielsweise dreieckförmig bei drei Quetschstellen zu gestalten, so daß sich plane Schlüsselflächen zum Aufsetzen eines entsprechenden Spezialschlüssels ergeben. Die zugeordnete erste Gehäusehälfte ist derartig auszubilden, daß am Gehäuseumfang mindestens zwei parallel gegenüberliegende plane Schlüsselflächen ein Festhalten und Verschrauben der beiden Gehäusehälften ermöglichen. Hierbei ist es als vorteilhaft anzusehen, daß durch die Erfordernis zur Verwendung eines Spezialschlüssels ein späterer unbefugter Eingriff in den Regler stark erschwert ist.

Eine weitere vorteilhafte Ausgestaltung des Erfindungsgegenstandes sieht vor, die Lagerringe zur Führung des Kolbens aus porösem Sintermetall herzustellen, und mit einem geeigneten Dauerschmiermittel zu versehen, wodurch eine hohe Funktionszuverlässigkeit im Langzeitbetrieb des Bremskraftreglers zu erwarten ist.

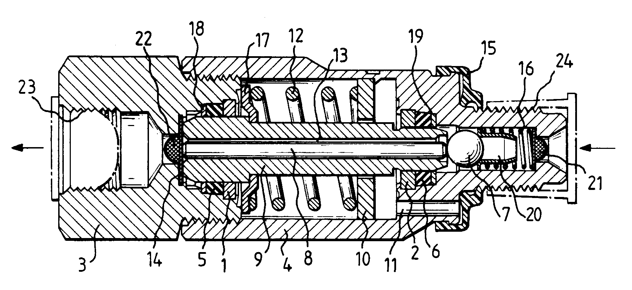

Ein Ausführungsbeispiel der Erfindung ist in der Figur 1 dargestellt und wird im folgenden näher beschrieben.

Es zeigt Fig. 1 einen Längsschnitt des Bremskraftreglers, bestehend aus den zwei in Längsrichtung miteinander verschraubten Gehäuseteilen 3 und 4, wobei die äußere Stirnfläche des Gehäuseteiles 3 eine Bohrung mit einer kegelförmigen Verjüngung und einem Innengewinde zum Anschluß einer Druckmittelleitung eines Radzylinders aufweist, während das dem Gehäuseteil 3 abgewandte Schaftende des Gehäuseteiles 4 mit einer Zulaufbohrung und einem Außengewinde zum Anschluß einer Druckmittelzufuhrleitung versehen ist. Zum Schutz gegen Schmutz- und Fremdkörperablagerungen im Inneren des Bremskraftreglers sind jeweils am Ende der kegelförmigen Verjüngung in den Druckmittelbohrungen der Gehäuseteile 3, 4 im kleinsten Querschnitt Filter 21, 22 eingefügt, so daß bei Druckmitteleinsteuerung das Druckmittel durch den Filter 21 und über den mittels Ventilfeder 16 auf das Kugellement 7 gepreßten Ventilanschlag 20 in die offenen Bohrung 13 des Kolbens 9 gelangt, sowie diesen Hohlraum druckbehaftet durchströmt, bis infolge des ansteigenden Druckes am Ausgang des Gehäuseteiles 3 eine Diffenrenzdruckkraft den Kolben 9 an das Kugelelement 7 verschiebt, und den Zulauf zur Bohrung 13 verschließt. Dabei ist der in der Zulaufleitung des Radzylinders eingesteuerte Druck von den druckbeaufschlagten Differenzflächen des Stufenkolbens, von dem eingesteuerten Pedaldruck und der Vorspannkraft der Feder 12 auf dem Federteller 17 abhängig. Der in die Bohrung 13 des Kolbens 9 eingefügte Stößel 8 ist in axialer Richtung frei beweglich und hält mit seinem dem Kugelelement 7 zugewandten Ende der Zulauf zur Bohrung 13 in der Ruhestellung des Kolbens 9 geöffnet, während im Regelzustand die wirkende Differenzdruckkraft am Kolben 9 diesen bis zur abdichtenden Anlage an das Kugelelement 7 verschiebt. Das dem Kugelelement 7 abgewandte Ende des Stößels 8 stützt sich auf den scheibenförmigen Körper 14 ab, der den Filter 22 aufnimmt. Die radiale Führung des Kolbens 9 bei gleichzeitig freier axialer Beweglichkeit erfolgt durch die verstemmte Festigung der zwei Lagerringe 1, 2 in den beiden Gehäuseteilen 3, 4 in einem definierten axialen Abstand, wobei zur Verminderung der Lagerreibung die Lagerringe 1, 2 aus porösem Sintermetall gefertigt und mit einem Dauerschmiermittel versehen sind. In den beiden Gehäuseteilen 3 und 4 sind Hohlräume 18, 19 eingefräst, die in Richtung zu den beiden angrenzenden Lagerringen 1, 2 kegelförmig geöffnet sind, und die beiden Dichtelemente 5, 6 mit quadratischem Profilquerschnitt aufnehmen. Diese Dichtelemente 5,6 sind vorzugsweise aus rohrstückartigem Gummivulkanisaten geschnitten und weisen bei geringen Herstellkosten eine hohe Maßhaltigkeit auf. Nach Einschieben der Dichtelemente 5, 6 in die kegelförmig geöffneten Hohlräume 18, 19 und Verstemmen der eingesetzten Lagerringe 1, 2 ist eine einwandfrei Abdichtung der Lagerringe 1, 2 gegenüber der Druckmittelseite gewährleistet. Begünstigt durch die Anfasung der Stirnflächen des Kolbens 9 läßt sich der Kolben in das Gehäuseteil 3 einschieben, wobei sich der Federteller 17 nach Überschieben über den Kolbenschaft an einer abgesetzten Kante des Stufenkolbens anlegt, um das eine Windungsende der Feder 9 aufzunehmen. Das entgegengesetzte Windungsende der Feder 9 stützt sich an den im Gehäuseteil 4 verstemmten Anschlag 10 ab, wobei das Gehäuseteil 4 von drei in gleichem Abstand über dem Umfang verteilte Justierbohrungen 11 koaxial durchdrungen ist, so daß der Anschlag 10 durch ein von außen in die Justierbohrungen 11 einzuführendes Spezialwerkzeug einstellbar ist. Nach dem Überstülpen und Verrasten der Schutzkappe 15 in eine umlaufende, nutförmige Einformung an der Mantelaußenfläche des Gehäuseteiles 4 sind die Justierbohungen 11 von außen gegen das Eindringen von Schmutz und Feuchtigkeit verschlossen.

### Bezugszeichenliste:

- 1: Lagerring
- 2: Lagerring
- 3: Gehäuseteil
- 4: Gehäuseteil
- 5: Dichtelement
- 6: Dichtelement
- 7: Kugelelement
- 8: Stößel
- 9: Kolben
- 10: Anschlag
- 11: Justierbohrung
- 12: Feder
- 13: Bohrung
- 14: Körper
- 15: Schutzkappe
- 16: Ventilfeder
- 17: Federteller
- 18: Hohlraum
- 19: Hohlraum
- 20: Ventilanschlag
- 21: Filter
- 22: Filter
- 23: Innengewindeanschluß
- 24: Außengewindeanschluß

## Patentansprüche

1. Bremskraftregler für hydraulische Bremsanlagen, der in den Druckmittelkreis eingefügt ist, mit Kolben (9) und Federn (12), einem den Kolben (9) aufnehmenden Gehäuse (3, 4) und einem Ventilmittel, dessen Schaltpunkt zur Regulierung eines definierten hydraulischen Drucks durch einen am Gehäuse und einen am Kolben angebrachten Anschlag der vorgespannten Feder (12) festgelegt ist, wobei durch mindestens eine Justieröffnung (11) im Gehäuse des Bremskraftreglers ein Einstellwerkzeug von außen einführbar ist, dadurch **gekennzeichnet,** daß der am Gehäuse (4) angebrachte Anschlag (10) der Feder (12) durch eine definierte Druckkraft des Einstellwerkzeuges justierbar ist.

2. Bremskraftregler nach Anspruch 1, dadurch **gekennzeichnet,** daß zur Fixierung des am Gehäuse angebrachten Anschlages (10) durch äußere Krafteinwirkung auf die Mantelfläche des Gehäuses eine form- und kraftschlüssige Arretierung des Anschlages (10) vorgesehen ist.

3. Bremskraftregler nach Anspruch 1 oder 2, dadurch **gekennzeichnet,** daß zwei Lagerringe (1 und 2) in einem definierten axialen Abstand zur Längsachse des Kolbens (9) im Gehäuse des Bremskraftreglers befestigt sind und den Kolben (9) radial führen, wobei zwischen den Lagerringen (1 und 2) und dem Gehäuse angeordnete Dichtelemente (5 und 6) den Kolben (9) an seiner Mantelfläche abdichtend umfassen.

4. Bremskraftregler nach Anspruch 1 bis 3, dadurch **gekennzeichnet**, daß der Kolben (9) als Stufenkolben ausgebildet ist und eine zentralsymmetrische Bohrung (13) zur Aufnahme eines Stößels (8) aufweist.

5. Bremskraftregler nach Anspruch 1 bis 4, dadurch **gekennzeichnet**, daß das Gehäuse des Bremskraftreglers aus zwei Gehäuseteilen (3 und 4) besteht, wobei das zweite Gehäuseteil (4) die koaxial duchdringende Justieröffnung (11) bzw. Bohrungen aufweist, die mittels einer Schutzkappe (15) von außen verschlossen ist.

6. Bremskraftregler nach Anspruch 1 bis 5, dadurch **gekennzeichnet**, daß der Stößel (8) an einer Endfläche von einem Ventilmittel vorzugsweise einem federbelasteten Kugelelement (7) kontaktiert ist und am entgegengesetzten Ende des Stößels (8) einen in dem Gehäuseteil (3) befestigten scheibenförmigen Körper (14) berührt.

7. Bremskraftregler nach Anspruch 1 bis 6, dadurch **gekennzeichnet**, daß ein Hohlraum des Gehäuses in Längsrichtung des Bremskraftreglers eine Feder (12) aufnimmt, die sich mit ihren Windungsenden am Anschlag (10) und an einem Federteller (17) abstützt, wobei der Federteller (17) von einer abgesetzten Kante des Stufenkolbens axial geführt ist und der Federteller (17) bei entspannter Federlänge die dem Hohlraum zugewandte innere Stirnfläche des ersten Gehäuseteiles (3) nahezu berührt.

8. Bremskraftregler nach Anspruch 1 bis 7, dadurch **gekennzeichnet**, daß die beiden Gehäuseteile (3 und 4) im inneren kegelförmig angefaste Sitzringe (16) zur Aufnahme der Dichtelemente (5 und 6) aufweisen, wobei das Profil der eingefügten Dichtelemente (5 und 6) einen vorzugsweise quadratischen Querschnitt besitzen.

9. Verfahren zur Montage eines Bremskraftreglers, insbesondere nach einem der vorhergehenden Ansprüche, dadurch **gekennzeichnet**, daß nach dem Einfügen des Kolbens (9) mit dem die Feder (12) aufnehmenden Federteller (17) und dem Anschlag (10) in die durch Dichtelemente (5 und 6) begrenzenden Lagerringe (1 und 2) und Einfügen in das aus zwei Gehäuseteilen (3 und 4) gebildeten Gehäuse sowie Verschließen der beiden Gehäuseteile (3 und 4) mit den darin befindlichen Filter und Ventilmittel, ein von außen koaxial in die Justieröffnung (11) des Gehäuseteiles (4) einzuführendes Einstellwerkzeug den Anschlag (10) mit definierter Druckkraft belastet, wonach der Anschlag (10) durch äußere radiale Krafteinwirkung auf das Gehäuseteil (4) kraft- und formschlüssig arretiert ist und eine Schutzkappe die Justierbohrung (11) nach dem Herausziehen des Einstellwerkzeuges verschließt.

## Claims

1. A brake power control for hydraulic brake systems, which is incorporated in the pressure fluid circuit, comprising a piston (9) and springs (12), a housing (3, 4) accommodating the piston (9), and a valve means whose switch point for regulation of a defined hydraulic pressure is fixed by each one stop of the prestressed spring (12) fitted on the housing and on the piston, with an adjustment tool being adapted to be introduced from the outside through at least one adjustment opening (11) in the housing of the brake power control,
**characterized** in that the stop (10) of the spring (12) mounted on the housing (4) can be adjusted by a defined pressing force of the adjustment tool.

2. A brake power control as claimed in claim 1,
**characterized** in that a positive locking and friction-type locking of the stop (10) is provided for the purpose of fixation of the stop (10) formed on the housing by force enacted on the peripheral surface of the housing from the outside.

3. A brake power control as claimed in claim 1 or 2,
**characterized** in that two bearing rings (1 and 2) are fixed within the housing of the brake power control at a defined axial distance in respect of the longitudinal axis of the piston (9) and guide the piston (9) in radial direction, with sealing elements (5 and 6) which are arranged between the bearing rings (1 and 2) and the housing sealingly enclosing the piston (9) at its peripheral surface.

4. A brake power control as claimed in claims 1 to 3,
**characterized** in that the piston (9) is configured in the shape of a stepped piston and is furnished with a centrally symmetrical bore (13) to accommodate a push rod (8).

5. A brake power control as claimed in claims 1 to 4,
**characterized** in that the housing of the brake power control is composed of two housing parts (3 and 4), the second housing part (4) comprising the coaxially penetrating adjustment opening (11), respectively bores, which is closed from the outside by means of a protecting cap (15).

6. A brake power control as claimed in claims 1 to 5,
**characterized** in that the push rod (8) is contacted at one end face by a valve means, preferably by a spring-loaded ball-shaped element (7) and contacts at the opposite end of the push rod (8) a disc-shaped body (14) being fastened in the housing part (3).

7. A brake power control as claimed in claims 1 to 6,
**characterized** in that a hollow space of the housing accommodates, in the longitudinal direction of the brake power control, a spring (12) which takes support with its spiral ends on the stop (10) and on a spring retainer (17), the said spring retainer (17) being axially guided by an offset edge of the stepped piston, and in that at unstressed length of the said spring, the spring retainer (17) almost contacts the internal front face of the first housing part (3) facing the hollow space.

8. A brake power control as claimed in claims 1 to 7,
**characterized** in that the two housing parts (3 and 4) in their inside are furnished with conically bevelled seat rings (16) to accommodate the sealing elements (5 and 6), the profile of the inserted sealing elements (5 and 6) having a preferably square cross-section.

9. A process for the assembly of a brake power control, in particular as claimed in anyone of the preceding claims,
**characterized** in that upon the insertion of the piston (9) with the spring retainer (17) accommodating the spring (12) and the stop (10) into the bearing rings (1 and 2) which limit by virtue of the sealing elements (5 and 6), and upon the insertion into the housing composed of two housing parts (3 and 4) and closing of the two housing parts (3 and 4) with the filters and the valve means disposed therein, an adjustment tool to be introduced from the outside coaxially into the adjustment opening (11) of the housing part (4) loads the stop (10) with a defined pressing force, subsequent whereto the stop (10) is arrested in a friction-type locking and positive locking by external force enacted radially onto the housing part (4) and a protecting cap closes the adjustment bore (11) upon the extraction of the adjustment tool.

## Revendications

1. Régulateur d'effort de freinage pour systèmes de freinage hydraulique, ce régulateur, inséré dans le circuit d'agent de pression, comprenant un piston (9), un ressort (12), un boîtier (3, 4), servant à loger le piston (9), et un moyen à fonction de valve dont le point de commutation, servant à la régulation d'une pression hydraulique définie, est déterminé par des butées du ressort (12) précontraint qui sont situées l'une sur le boîtier et l'autre sur le piston, tandis qu'un instrument de réglage de position peut être introduit de l'extérieur dans le boîtier du régulateur d'effort de freinage par au moins une ouverture d'ajustement (11), caractérisé en ce que la butée (10) du ressort (12) qui est disposée sur le boîtier (4) est agencée de façon à pouvoir être ajustée à l'aide d'une force déterminée de pression de l'instrument de réglage de position.

2. Régulateur d'effort de freinage suivant la revendication 1, caractérisé en ce que, pour immobiliser la butée (10) disposée sur le boîtier au moyen de l'application d'une force extérieure sur la surface cylindrique du boîtier, il est prévu un blocage de la butée (10) par complémentarité de formes et par application d'une force.

3. Régulateur d'effort de freinage suivant la revendication 1 ou 2, caractérisé en ce que deux bagues de portée (1 et 2) sont fixées dans le boîtier du régulateur d'effort de freinage suivant un espacement axial déterminé selon l'axe longitudinal du piston (9) et guident radialement ce piston (9), tandis que des éléments d'étanchéité (5 et 6), disposés entre les bagues de portée (1 et 2) et le boîtier, entourent le piston (9) d'une manière étanche sur sa surface cylindrique.

4. Régulateur d'effort de freinage suivant les revendications 1 à 3, caractérisé en ce que le piston (9) est réalisé sous la forme d'un piston étagé et comporte un alésage (13) à symétrie centrale servant à recevoir une tige-poussoir (8).

5. Régulateur d'effort de freinage suivant les revendications 1 à 4, caractérisé en ce que le boîtier du régulateur d'effort de freinage est constitué de deux parties de boîtier (3 et 4), la seconde partie de boîtier (4) étant traversée parallèlement à son axe par l'ouverture d'ajustement (11) ou les perçages, qui sont obturés de l'extérieur au moyen d'un capuchon de protection (15).

6. Régulateur d'effort de freinage suivant les revendications 1 à 5, caractérisé en ce que, sur une surface extrême, la tige-poussoir (8) reçoit le contact d'un moyen à fonction de valve, de préférence d'un obturateur sphérique (7) soumis à l'action d'un ressort, et en ce qu'à l'extrémité opposée de la tige-poussoir (8), cette dernière est au contact d'un corps (14) en forme de disque fixé dans la partie de boîtier (3).

7. Régulateur d'effort de freinage suivant les revendications 1 à 6, caractérisé en ce qu'une cavité du boîtier, ménagée selon la direction longitudinale du régulateur d'effort de freinage, reçoit un ressort (12) qui, par les extrémités de son enroulement, prend appui sur la butée (10) et sur une coupelle de ressort (17), cette coupelle de ressort (17) étant guidée axialement par un bord épaulé du piston étagé, tandis que, lorsque le ressort est détendu en longueur, cette coupelle de ressort (17) est presque au contact de la surface frontale intérieure de la première partie de boîtier (3) qui est tournée vers la cavité.

8. Régulateur d'effort de freinage suivant les revendications 1 à 7, caractérisé en ce que les deux parties de boîtier (3 et 4) comprennent intérieurement des portées annulaires (18, 19) tronconiques fraisées servant à recevoir les éléments d'étanchéité (5 et 6), le profil des éléments d'étanchéité (5 et 6) insérés présentant une section transversale de préférence carrée.

9. Procédé de montage d'un régulateur d'effort de freinage, notamment suivant l'une des revendications précédentes, caractérisé en ce qu'après avoir introduit le piston (9), avec la coupelle de ressort (17), recevant le ressort (12), et la butée (10) dans les bagues de portée (1 et 2) délimitées par des éléments d'étanchéité (5 et 6), et après introduction dans le boîtier formé de deux parties de boîtier (3 et 4), ainsi que fermeture des deux parties de boîtier (3 et 4) avec le filtre et le moyen à fonction de valve disposés dans ces dernières, un instrument de réglage de position, devant être introduit de l'extérieur et parallèlement à l'axe dans l'ouverture d'ajustement (11) de la partie de boîtier (4), applique un effort sur la butée (10) avec une force de pression déterminée, tandis qu'ensuite, sous l'action radiale extérieure d'une force sur la partie de boîtier (4), la butée (10) est bloquée par complémentarité de formes et application d'une force et qu'un capuchon de protection obture le perçage d'ajustement (11) après le retrait de l'instrument de réglage de position.
